# EUROPEAN PATENT APPLICATION

(11) **EP 4 220 972 A1**
(43) Date of publication of application: **02.08.2023**
(21) Application number: 21872248.6
(22) Date of filing: 13.09.2021
(51) Int. Cl.: H04B 1/18, H01Q 1/32, H01Q 1/52, H04B 1/40

(54) **ANTENNA DEVICE AND ELECTRONIC CIRCUIT PROTECTIVE DEVICE**

(30) Priority: 28.09.2020 JP 2020162754
(71) Applicant: YOKOWO CO., LTD., Kita-ku Tokyo 114-8515 (JP)
(72) Inventor: YOKOTA Yusuke, Tomioka-Shi, Gunma 370-2495 (JP); KONDO Akira, Tomioka-Shi, Gunma 370-2495 (JP)
(74) Representative: Gunzelmann, Rainer
(86) International application number: PCT/JP2021/033600
(87) International publication number: WO 2022/065118

(57) **Abstract**

In an antenna device, it is made possible to protect a built-in electronic circuit from electrical stress, and to relieve an influence on signal transmission. The antenna device includes an antenna part 11, a board 12 to which the antenna part 11 is connected, an electronic circuit 14 mounted to the board 12, and a reactance adjustment device 16 that cancels reactance causing electrical stress to be applied to a component of the electronic circuit 14. The board 12 includes a board input part A, and a circuit input part B. The reactance adjustment device 16 is mounted between the board input part A and the circuit input part B, and is connected to a ground part.

## Description

### Technical Field

The present invention relates to an antenna device that is mountable on a moving body or the like and an electronic circuit protection device.

### Background Art

In a case where electronic components for a plurality of frequency bands are arranged close to one another in one case as in an antenna device for a vehicle, for example, interference between the electronic components may occur, or noise from the outside may enter, and antenna performance as designed may not be able to be obtained. Considering this point, Patent Literature 1 discloses an antenna device for a vehicle having two antenna elements corresponding to two types of frequency bands, and an attenuation circuit that attenuates a signal of the other frequency band is connected to one of the two antenna elements.

Further, Patent Literature 2 discloses an antenna device mounted with a protection circuit between an antenna part and an electronic circuit (external connection terminal), one end of the protection circuit being grounded, the other end being connected to a line connecting the antenna part and the electronic circuit. The protection circuit causes a surge current caused by a surge voltage that instantaneously exceeds a steady state to flow to a ground side.

The attenuation circuit and the protection circuit as above normally function as protection devices for eliminating electrical stresses in electronic circuits that are used in environments where the electronic circuits can receive the electrical stresses caused by occurrences of an unintentional electromagnetic field, voltage, and current.

### Prior Art Documents

### Patent Literature

Patent Literature 1: Japanese Patent Laid-Open No. 2020-136880
Patent Literature 2: Japanese Patent Laid-Open No. 2019-125861

### Summary of Invention

### Problems to Be Solved by the Invention

The protection devices described in Patent Literatures 1 and 2 can be said to be very useful devices for electronic circuits that must be used in environments that can receive electrical stresses.

However, such devices do not directly contribute to signal transmission from an input side to an output side of electronic circuits. Consequently, from a viewpoint of signal transmission, an extra load is added, and depending on a frequency band in use of the electronic circuit, reactance of the protection device may become so large that it cannot be ignored. In particular, in a case where the protection device is added between an antenna part and an electronic circuit, impedance mismatch or power transmission loss increases, and gain characteristics and VSWR characteristics of the antenna part viewed from the electronic circuit side may deteriorate.

One example of objects of the present disclosure is to make it possible, in an antenna device, to protect components of an electronic circuit used in an environment that can receive electrical stress from such electrical stress, and to relieve an influence on signal transmission. The other objects of the present disclosure will become apparent from the description herein.

### Solution to the Problems

One aspect of the present disclosure is an antenna device including an antenna part, a board to which the antenna part is connected, an electronic circuit mounted to the board, and a reactance adjustment device that cancels reactance in a frequency band in use, the reactance causing electrical stress to be applied to a component of the electronic circuit, wherein the board includes a board input part serving as an input interface with the antenna part, and the reactance adjustment device is mounted between the board input part and the electronic circuit, and is connected to a ground part.

Another aspect of the present disclosure is an antenna device including an antenna part, a board to which the antenna part is connected, an electronic circuit mounted to the board, and a reactance adjustment device that cancels reactance in a frequency band in use, the reactance causing electrical stress to be applied to a component of the electronic circuit, wherein the board includes an external connection part to be connected to external electronic equipment, and the reactance adjustment device is mounted between the electronic circuit and the external connection part, and is connected to a ground part.

Another aspect of the present disclosure is an electronic circuit protection device including an electronic circuit, an additional device that is connected between an input side or an output side of the electronic circuit, and a ground part, and is added to protect a component of the electronic circuit from electrical stress, and a reactance adjustment device that cancels reactance of the additional device in a frequency band in use.

### Advantageous Effects of the Invention

According to the above-described aspects, it is possible to protect the components of the electronic circuit from electrical stress, and to relieve an influence on signal transmission.

### Brief Description of Drawings

[Figure 1] Figure 1 is a schematic diagram showing a basic configuration example of an antenna device to which the present disclosure can be applied.
[Figure 2] Figure 2 is a schematic diagram showing a configuration example of an antenna device having only an additional device.
[Figure 3] Figure 3 is a schematic diagram showing a configuration example of an antenna device according to a first embodiment in which a reactance adjustment device is mounted.
[Figure 4A] Figure 4A is a Smith chart representing the loci of impedances in the reactance adjustment device itself, and the antenna devices in Figure 2 and Figure 3.
[Figure 4B] Figure 4B is a VSWR characteristic diagram in the reactance adjustment device itself, and the antenna devices in Figure 2 and Figure 3.
[Figure 5] Figure 5 is a graph representing transmission loss characteristics in the antenna devices in Figure 2 and Figure 3.
[Figure 6A] Figure 6A is a diagram showing a specific example of the reactance adjustment device.
[Figure 6B] Figure 6B is a diagram showing a specific example of the reactance adjustment device.
[Figure 6C] Figure 6C is a diagram showing a specific example of the reactance adjustment device.
[Figure 6D] Figure 6D is a diagram showing a specific example of the reactance adjustment device.
[Figure 6E] Figure 6E is a diagram showing a specific example of the reactance adjustment device.
[Figure 6F] Figure 6F is a diagram showing a specific example of the reactance adjustment device.
[Figure 6G] Figure 6G is a diagram showing a specific example of the reactance adjustment device.
[Figure 7] Figure 7 is a view showing an example in which the reactance adjustment device is configured by a conductor pattern.
[Figure 8] Figure 8 is a schematic diagram showing an arrangement structure example of each of components of the antenna device according to the first embodiment.
[Figure 9] Figure 9 is a schematic diagram showing a configuration example of an antenna device according to a second embodiment.
[Figure 10A] Figure 10A is a Smith chart representing the loci of impedances in the antenna devices in Figure 2 and Figure 9.
[Figure 10B] Figure 10B is a VSWR characteristics diagram in the antenna devices in Figure 2 and Figure 9.
[Figure 11] Figure 11 is a graph representing transmission loss characteristics in the antenna devices in Figure 2 and Figure 9.
[Figure 12] Figure 12 is a schematic diagram showing a configuration example of an antenna device according to a third embodiment.
[Figure 13A] Figure 13A is a Smith chart representing the loci of impedances in the antenna devices in Figure 2 and Figure 12.
[Figure 13B] Figure 13B is a VSWR characteristics chart of the antenna devices in Figure 2 and Figure 12.
[Figure 14] Figure 14 is a graph representing transmission loss characteristics in the antenna devices in Figure 2 and Figure 12.
[Figure 15] Figure 15 is a schematic diagram showing a configuration example of an antenna device according to a fourth embodiment.
[Figure 16A] Figure 16A is a VSWR characteristics diagram in the antenna devices in Figure 2 and Figure 15.
[Figure 16B] Figure 16B is a VSWR characteristics diagram in the antenna devices in Figure 2 and Figure 15.
[Figure 17] Figure 17 is a graph representing transmission loss characteristics comparing a case with only a Zener diode and a case with a Zener diode and a TVS diode in the antenna device of the fourth embodiment.
[Figure 18] Figure 18 is a schematic diagram showing a configuration example of an antenna device according to a fifth embodiment.
[Figure 19A] Figure 19A is an illustration diagram of an alternative configuration of a reactance adjustment device.
[Figure 19B] Figure 19B is an illustration diagram of an alternative configuration of the reactance adjustment device.
[Figure 19C] Figure 19C is an illustration diagram of an alternative configuration of the reactance adjustment device.
[Figure 19D] Figure 19D is an illustration diagram of an alternative configuration of the reactance adjustment device.
[Figure 20A] Figure 20A is an illustration diagram of a connection aspect of the reactance adjustment device.
[Figure 20B] Figure 20B is an illustration diagram of a connection aspect of the reactance adjustment device.
[Figure 21] Figure 21 is a view showing another example in which the reactance adjustment device is configured by a conductor pattern.
[Figure 22] Figure 22 is a schematic diagram showing a configuration example of an antenna device according to a sixth embodiment.
[Figure 23] Figure 23 is a schematic diagram showing a configuration example of an antenna device of a modification example of the sixth embodiment.
[Figure 24A] Figure 24A is an explanatory diagram showing specific examples of an additional device and a reactance adjustment device according to the sixth embodiment.
[Figure 24B] Figure 24B is an explanatory diagram showing specific examples of the additional device and the reactance adjustment device according to the sixth embodiment.
[Figure 24C] Figure 24C is an explanatory diagram showing specific examples of the additional device and the reactance adjustment device according to the sixth embodiment.
[Figure 25] Figure 25 is a graph representing a transmission loss in which a case with only a Zener diode and a case with the Zener diode and a TVS diode in the antenna device according to the sixth embodiment are compared.
[Figure 26] Figure 26 is a schematic diagram showing a configuration example of an antenna device according to a seventh embodiment.
[Figure 27] Figure 27 is a schematic diagram showing a configuration example of an antenna device according to an eighth embodiment.

### Description of Embodiments

Hereinafter, embodiment examples in a case of carrying out the present disclosure as an antenna device that is mounted to a moving body such as a vehicle will be described. The antenna device receives signals from 470 MHz to 720 MHz that are in a DTTB (Digital Television Terrestrial Broadcasting System) band.

### [First Embodiment]

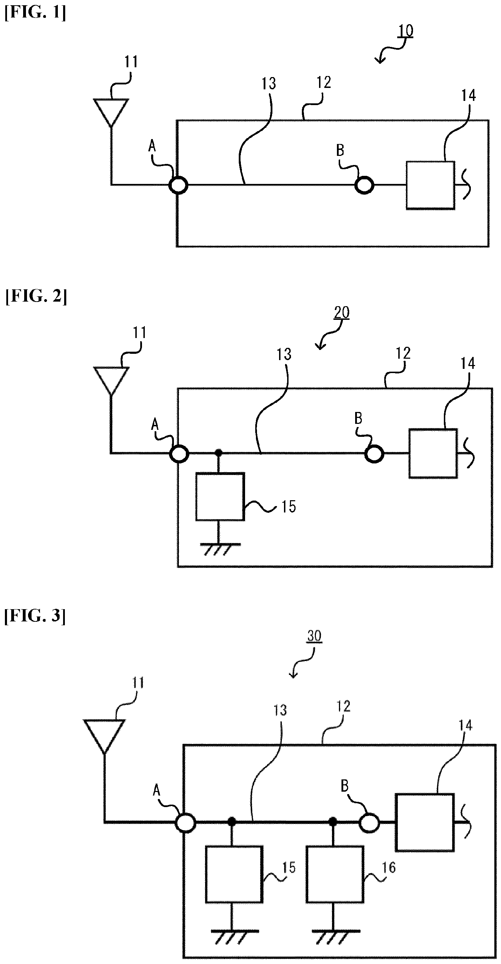

First, a basic configuration example of an antenna device to which the present disclosure can be applied is shown in Figure 1. An antenna device 10 shown in Figure 1 is configured by accommodating an antenna part 11 and a circuit board 12 in an antenna case described later and attached to a vehicle roof or the like. The antenna part 11 is configured by a planar conductor, a linear (including rod-shaped) conductor or a conductor in which these conductors are combined, which resonates in the DTTB band. On the circuit board 12, a board input part A to be an input interface with the antenna part 11, and a circuit input part B to be an input interface of an electronic circuit 14 are mounted. In the electronic circuit 14, electronic components including active elements such as transistors and diodes are implemented. The board input part A and the circuit input part B are electrically connected with a line 13 such as a conductor pattern.

What is arranged between the board input part A and the circuit input part B is not limited to a conductor pattern. One or a plurality of circuits may be arranged between the board input part A and the circuit input part B, for example, either one or both of an additional device 15 described later and a reactance pattern 211 may be arranged.

It is assumed that in the DTTB band, a characteristic impedance at a time of an antenna part 11 side being seen from the board input part A is 50 Ω in the present example, and an impedance at a time of an electronic circuit 14 side being seen from the circuit input part B is also 50 Ω in the present example. In this case, if an impedance of the line 13 between the board input part A and the circuit input part B is also 50 Ω, the impedances in a system to the electronic circuit 14 from the antenna part 11 are matched and a transmission loss of power (signal level) at a time of signal transmission hardly occurs.

The electronic circuit 14 is configured by including the plurality of electronic components described above, and these electronic components include many electronic components that are vulnerable to the aforementioned electrical stress. Therefore, in a case where antenna parts for other frequency bands, electronic circuits, and the like are closely arranged in the antenna case, a strong transmission wave is outputted from an antenna device mounted to another vehicle traveling in a vicinity, or a surge exceeding a steady state instantaneously occurs, the electronic circuit 14 is severely influenced, even if it is an electromagnetic wave or voltage at a frequency different from the DTTB band. Therefore, in the first embodiment, the additional device 15 for eliminating electrical stress is mounted in a front stage of the electronic circuit 14 as in an antenna device 20 shown in Figure 2.

The additional device 15 is a semiconductor diode with two terminals in the present example, one end thereof is connected to the line 13, and the other end is connected to a ground part.

The additional device 15 has capacitance (capacitive reactance) that is inter-terminal capacitance. The inter-terminal capacitance is about 0.2 pF to 30 pF depending on a type of the semiconductor diode, and is 7 pF in the DTTB band in the case of the present example. When a shunt connection of the additional device 15 like this to the line 13 is performed, electrical stress given to the components of the electronic circuit 14 is eliminated, but the component unnecessary to the function of signal transmission is added, so that impedance mismatch always occurs between the antenna part 11 and the electronic circuit 14 in the DTTB band. In other words, the impedance at the time of the electronic circuit 14 side being seen from the board input part A becomes capacitive in the DTTB band, and transmission loss of power that is transmitted from the board input part A to the circuit input part B increases. Therefore, an antenna gain is reduced.

Thus, in the first embodiment, as in an antenna device 30 in Figure 3, a reactance adjustment device 16 that cancels a fluctuation in reactance caused by the presence of the additional device 15 is mounted in parallel with the additional device 15 while making use of the electrical stress elimination operation by the additional device 15. The reactance adjustment device 16 is an inductive reactance element having inductance of 10.2 nH in the DTTB band in the present example, one end thereof is connected to the line 13, and the other end is connected to a ground part. By the reactance adjustment device 16, a fluctuation to capacitance, of impedance when using a semiconductor diode as the additional device 15 is eliminated.

A type and a mode of the inductive reactance element may be arbitrary, but by using a chip inductor, the inductive reactance element becomes compacter (thinner) than a coil, and has an advantage that even when it is implemented in the circuit board 12 with the additional device 15, a design size of the circuit board 12 does not have to be changed.

The inductive reactance element may be configured by a combination of a plurality of conductor patterns instead of the chip inductor.

Inductance of the reactance adjustment device 16 is desirably set so that a reactance component of the inductance is in a complex conjugate relationship to the inter-terminal capacitance of the additional device 15. "Complex conjugate" means that the polarities are opposite and the magnitudes are equal.

In other words, the "complex conjugate relationship" means a relationship in which when reactance of the additional device 15 is jX, reactance of the reactance adjustment device 16 is +jX. Thereby, capacitive reactance of the additional device 15 in the DTTB band is cancelled by inductive reactance of the reactance adjustment device 16, and impedance between the board input part A and the circuit input part B becomes 50 Ω. Showing in a numerical value example specifically, while the capacitive reactance of the additional device 15 is approximately -j24.1 (Ω) in the frequency of 595 MHz, the inductive reactance of the reactance adjustment device 16 is +j24.1 (Ω), and the impedances are in a complex conjugate relationship.

The reactance adjustment device 16 is arranged at a position as close as possible to an arrangement position of the additional device 15. Thereby, it is possible to suppress inductance and capacitance of the line 13 from the additional device 15 to the reactance adjustment device 16. Preferably, the reactance adjustment device 16 is arranged in a range within 1/10 wavelength of the highest frequency in the DTTB band from the position in which the additional device 15 is arranged. Thereby, it is possible to further reduce the influence of inductance and capacitance of the line 13.

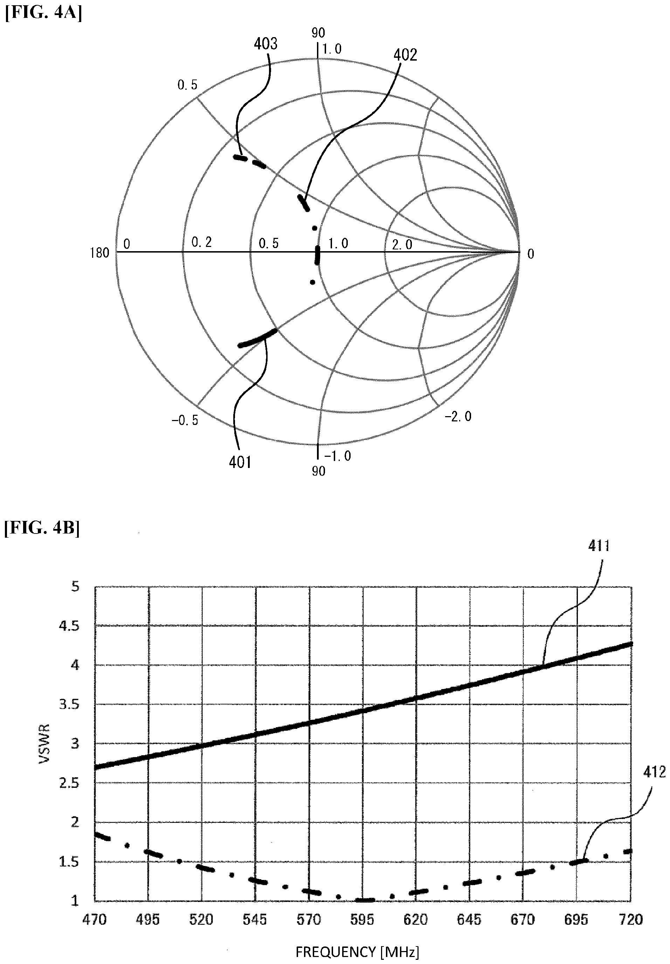

Next, an antenna characteristic of the antenna device 30 according to the first embodiment will be described. Figure 4A is a Smith chart showing the loci of impedances in the reactance adjustment device 16 alone, and the antenna device 20 and the antenna device 30. As is known, an upper half region of the Smith chart shows inductivity, and a lower half region shows capacitance. In the drawing, a solid line 401 shows a locus of impedance in the antenna device 20, an alternate long and short dash line 402 shows a locus of the impedance in the antenna device 30, and a dotted line 403 shows a locus of the impedance in the reactance adjustment device 16 alone. At a position of 1.0 of the Smith chart center, impedances between the antenna part 11 and the electronic component 14 are matched, and a transmission loss becomes the smallest. Accordingly, in order to minimize the transmission loss between the antenna part 11 and the electronic component 14 in the DTTB band, it is preferable to satisfy a condition that the locus of the impedance passes through the position of 1.0 of the Smith chart center. The above is a common content in the Smith chart used in the present specification.

As shown in Figure 4A, the locus 403 of the impedance in the reactance adjustment device 16 alone is inductive throughout an entire region of the DTTB band as a matter of course. The locus 401 of the impedance of the antenna device 20 is capacitive throughout the entire region of the DTTB band. Further, the locus 401 of the impedance is substantially symmetrical about a horizontal axis with the locus 403 of the impedance in the reactance adjustment device 16 alone, and is in the lower half region of the Smith chart. On the other hand, the locus 402 of the impedance in the antenna device 30 passes through the horizontal axis in a vicinity of 1.0 of the Smith chart center.

In this way, the antenna device 30 having the reactance adjustment device 16 having a complex conjugate relationship to the inter-terminal capacitance of the additional device 15 reduces the transmission loss caused by the presence of the additional device 15.

Figure 4B is a VSWR characteristic diagram in the antenna device 20 and the antenna device 30. In the drawing, an axis of ordinates represents VSWR, and an axis of abscissas represents a frequency (MHz). A solid line 411 represents a VSWR characteristic in the antenna device 20, and an alternate long and short dash line 412 represents a VSWR characteristic in the antenna device 30. As shown in the solid line 411 in Figure 4B, the VSWR in the antenna device 20 becomes larger substantially rectilinearly as the frequency becomes higher, and the minimum value thereof is 2.7, whereas a maximum value is 4.3. In contrast to this, as shown in the alternate long and short dash line 412 in Figure 4B, the VSWR of the antenna device 30 reaches a minimum value 1.0 in a vicinity of a frequency 600 MHz, and a maximum value thereof is 1.9.

In this way, in the antenna device 30 having the reactance adjustment device 16 that has impedance in a complex conjugate relationship to the inter-terminal capacitance of the additional device 15, VSWR is less than 2 in all frequencies in the DTTB band.

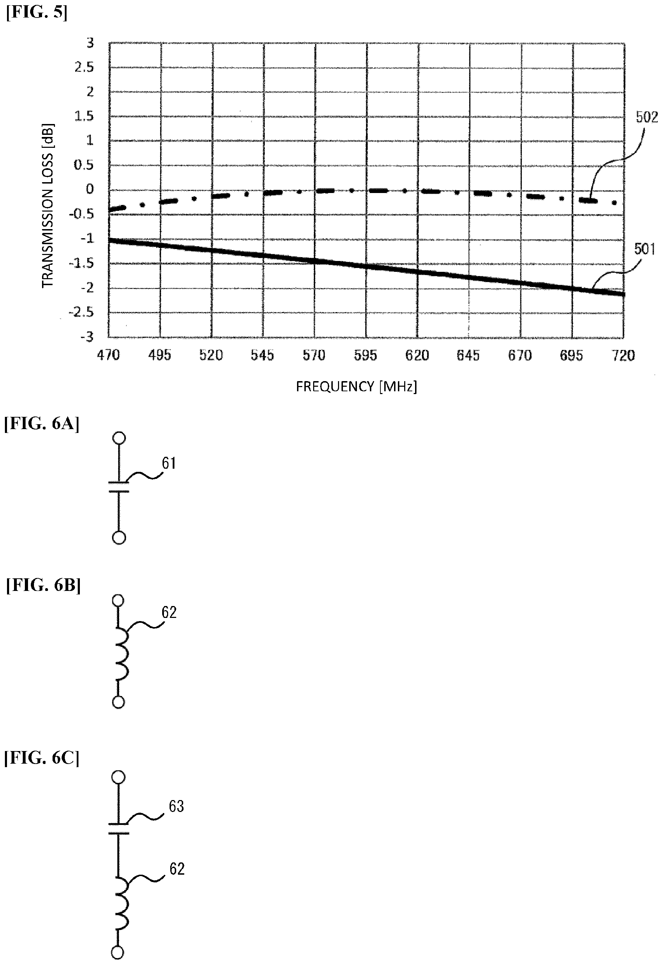

Figure 5 is a graph representing transmission loss characteristics in the antenna device 20 and the antenna device 30. In this graph, a transmission loss in the antenna device 10 shown in Figure 1 is set as 0 dB. In the drawing, a solid line 501 represents a transmission loss (dB) by the configuration of the antenna device 20. In the configuration of the antenna device 20, the transmission loss is larger than -1 dB throughout an entire region of the DTTB band. Further, as the frequency becomes higher, the transmission loss becomes larger, and a transmission loss in the vicinity of 720 MHz which is an upper limit frequency in the DTTB band reaches -2.1 dB. An alternate long and short dash line 502 represents a transmission loss (dB) of the antenna device 30. The transmission loss in the antenna device 30 is substantially 0 dB throughout a substantially entire region of the DTTB band, a fluctuation by the frequency is also small, and the transmission loss is about -0.4 dB at a maximum.

This is considered to be because in the antenna device 20 in which only the additional device 15 is mounted, a degree of impedance mismatch increases as a frequency in use becomes higher. In contrast to this, in the antenna device 30 in which the reactance adjustment device 16 is mounted in parallel with the additional device 15, it is possible to cancel a fluctuation in impedance caused by mounting the additional device 15, even if the reactance of the additional device 15 fluctuates with a change in the frequency in use, because the reactance adjustment device 16 cancels the reactance that is fluctuated. Therefore, in the antenna device 30, it is possible to effectively suppress impedance mismatch and increase in transmission loss of power while maintaining an elimination operation of electrical stress of the additional device 15.

### <Modification of First Embodiment>

In the first embodiment, a description is made based on the premise that the additional device 15 is a semiconductor diode, that is, the additional device 15 generates capacitive reactance in the DTTB band. However, the additional device 15 may be a device that inductively changes the impedance from the board input part A to the circuit input part B, for example, an inductor. In this case, the reactance adjustment device 16 can use a capacitive reactance element 61 shown in Figure 6A. The capacitive reactance element 61 can be a semiconductor diode or other capacitive reactance elements that have the inter-terminal capacitance described above in the DTTB band, for example. By arranging the capacitive reactance element 61 in parallel with the additional device 15, it is possible to suppress an increase in transmission loss of power from the board input part A to the circuit input part B.

Further, in a case where the reactance adjustment device 16 is configured by only an inductive reactance element 62 shown in Figure 6B, if a DC component is contained in the power inputted from the board input part A, the inductive reactance element 62 short-circuits between the line 13 and the ground part. Thus, in an application in which the inputted power may contain a DC component, a DC cut capacitor 63 is connected in series to the inductive reactance element 62 as shown in Figure 6C, and thereby it is possible to prevent a short circuit while maintaining an electronic component addition function by the inductive reactance element 62. In this case, the DC cut capacitor 63 may be arranged between the inductive reactance element 62 and the ground part, or may be arranged between the inductive reactance element 62 and the line 13.

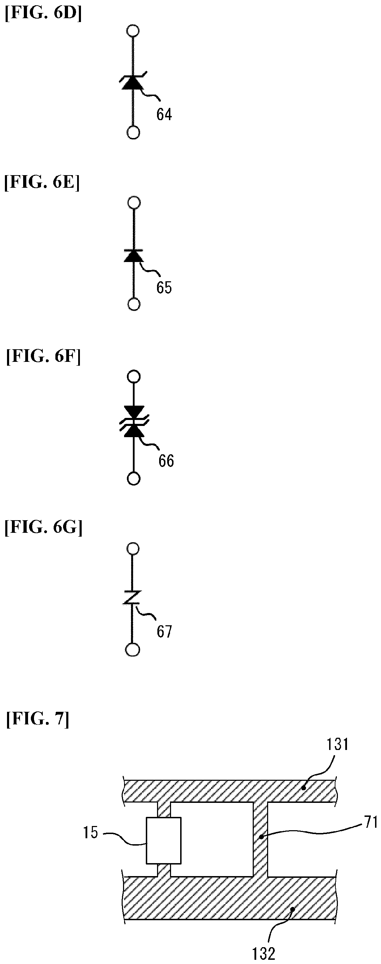

At the additional device 15 and the reactance adjustment device 16, it is possible to use various devices or circuits according to a type of electrical stress. For example, it is possible to use, a Zener diode 64 shown in Figure 6D, an ordinary semiconductor diode 65 shown in Figure 6E, a TVS diode 66 shown in Figure 6F, a varistor 67 shown in Figure 6G, or a circuit having an equivalent function to these devices.

The Zener diode 64 is an element that outputs a constant voltage even when a current changes, and whereas the ordinary semiconductor diode 65 is used in a forward direction, the Zener diode 64 is used in a reverse direction. The TVS diode 66 is an element that absorbs a transient voltage by rapidly changing in resistance from high resistance to low resistance when receiving a high transient voltage, and thereby outputs a constant voltage that becomes low. The varistor 67 is an element having a current non-linearity, and is an element that guides a surge current to a ground part when the surge current exceeding a steady state instantaneously flows.

Further, the reactance adjustment device 16 can also be configured by a conductor pattern, with the line. For example, as shown in Figure 7, the additional device 15 and a reactance pattern 71 may be mounted in parallel between a line 131 and a ground part 132 that are formed of a conductor pattern. A width, thickness, and length (distance between the line 131 and the ground part 132) of the reactance pattern 71 are set at such values that impedance is in a complex conjugate relationship to the inter-terminal capacitance of the additional device 15. A shape of the reactance pattern 71 is not limited to a linear shape as illustrated, but may be a non-linear shape, or a combination of a pattern in a linear shape and a pattern in a non-linear shape.

### < Arrangement Structure of Components>

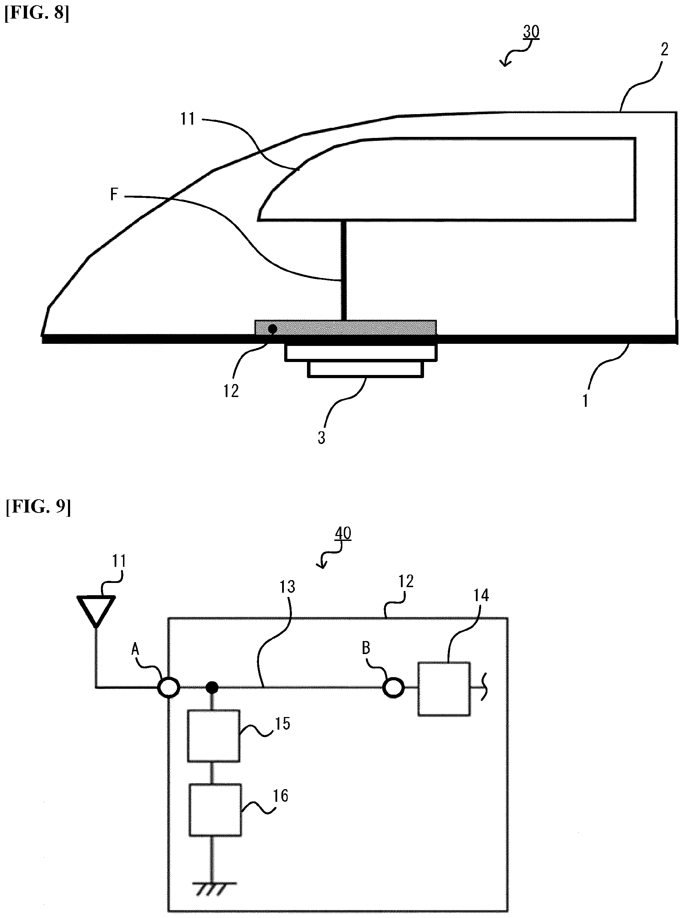

Next, an arrangement structure of each component in the antenna device 30 will be described. Figure 8 is a schematic diagram showing a configuration example of the antenna device 30. The antenna device 30 has an antenna base 1, and an antenna case 2 that covers the antenna base 1 from above, and is formed of a radio wave transmissive member. An accommodation space is formed by the antenna base 1 and the antenna case 2, and the accommodation space is sealed to be watertight. The antenna part 11 and the circuit board 12 described above are arranged in the accommodation space. On the antenna base 1, an attaching part 3 for attaching the antenna device 30 to a vehicle roof or the like is mounted.

The circuit board 12 is fixed to a site corresponding to the attaching part 3 of the antenna base 1. The antenna part 11 and the board input part A on the circuit board 12 are conductively connected via a feeder F formed of a coaxial cable, a rod-shaped conductor, or a linear conductor. In this example, the circuit board 12 is arranged in a front part (left direction to the drawing) of the antenna part 11 in an upward view (a view from the antenna case 2 to the antenna base 1). A configuration example shown in Figure 8 is common in the antenna device 10 in Figure 1 and the antenna device 20 in Figure 2. A difference of the antenna device 10 and the antenna device 20 from the antenna device 30 is that in the circuit board 12 of the antenna device 10 and the antenna device 20, the additional device 15 or the reactance adjustment device 16 is not present. Arrangement of the circuit board 12 is not limited to the aforementioned example in which the circuit board 12 is arranged in the front part of the antenna part 11 in the upward view. The circuit board 12 can only be arranged under the antenna part 11 in a side view that is a view in a direction orthogonal to the upward view. Further, the circuit board 12 does not have to be arranged directly under the antenna part 11, but may be arranged in a position where the board is not covered with the antenna part in a top view, for example.

### [Second Embodiment]

Next, a second embodiment of the preset disclosure will be described. Figure 9 is a schematic diagram showing a configuration example of an antenna device 40 according to the second embodiment, and components having the same functions as the components shown in the first embodiment are assigned with the same reference signs. The antenna device 40 has a configuration in which in a circuit board 12, a reactance adjustment device 16 having the same polarity as an additional device 15 is inserted and connected in series between the additional device 15 and the ground part shown in the antenna device 20 in Figure 2.

Series impedance of the reactance adjustment device 16 is set at a value that is the same as or larger than the series impedance of the additional device 15. Thereby, impedance between a line 13 and a ground part increases to eliminate inflow of power, so that it is possible to suppress an increase in transmission loss between a board input part A and a circuit input part B.

In the present example, the additional device 15 is the same semiconductor diode as in the first embodiment, and an inter-terminal capacitance thereof is 7 pF similar to the inter-terminal capacitance in the first embodiment. On the other hand, the reactance adjustment device 16 is a chip capacitor in the second embodiment, and a tip capacitor with a capacity thereof being 5 pF is used.

A condition of series impedance for suppressing or reducing an increase in transmission loss while cancelling a fluctuation in impedance at the line 13 due to addition of the respective devices 15 and 16, in a state in which the additional device 15 and the reactance adjustment device 16 are connected in series as shown in Figure 9 will be described. Here, for convenience, it is assumed that conductor resistance values of the respective devices 15 and 16 are sufficiently small, and can be ignored.

The series impedance is obtained by expression of |Z| = √{(R)²+(jX)²}. The reactance of the additional device 15 at a time of series connection at a time of a frequency being 595 MHz is -j38.3 (Ω), and since a conductor resistance value R can be ignored as described above, impedance of the additional device 15 at the time of series connection is 38.3 Ω. Similarly, the reactance of the reactance adjustment device 165 pF is -j53.6 Ω, and impedance is 53.6 Ω. From these results, a value of the impedance of the reactance adjustment device 16 is higher than a value of the impedance of the additional device 15.

From a viewpoint of component arrangement, the reactance adjustment device 16 is desirably arranged in a position as close as possible to a position where the additional device 15 is arranged. Wiring from the additional device 15 to the reactance adjustment device 16 includes inductance and capacitance, so that the shorter the wiring is, the more an influence of the inductance and capacitance can be suppressed. According to simulation, it is found that an increase in transmission loss is suppressed by arranging the reactance adjustment device 16 in a range within 1/10 wavelength of an upper limit frequency in the DTTB band from the position where the additional device 15 is arranged, as described above.

In the second embodiment, a chip capacitor is used as the reactance adjustment device 16, but the reactance adjustment device 16 is not limited to this, and another device having capacitance in the DTTB band or a conductor pattern described later may be used.

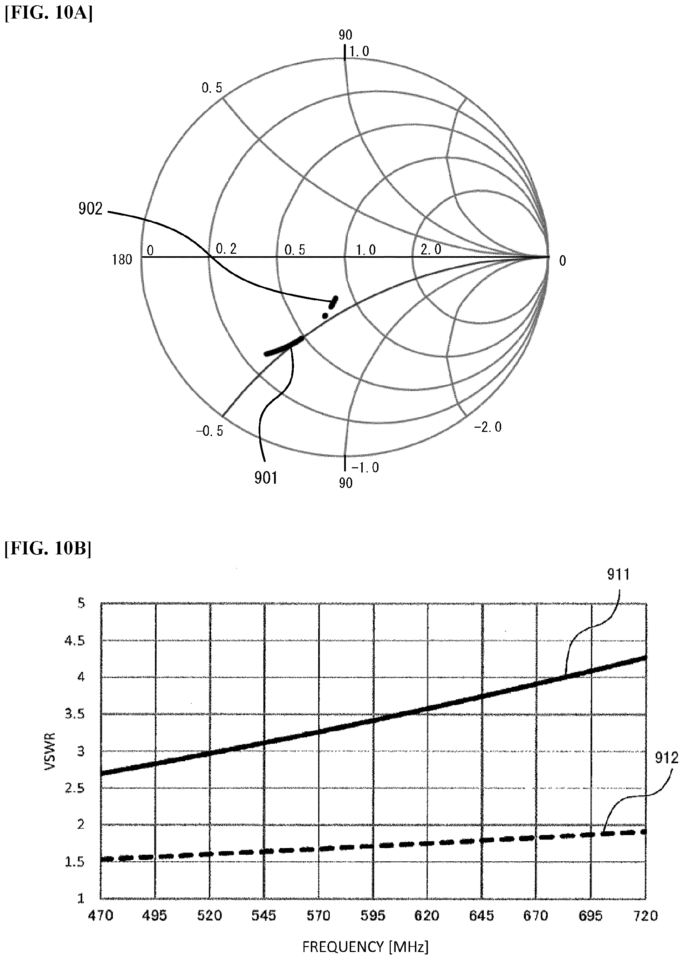

Next, an antenna characteristic of the antenna device 40 according to the second embodiment will be described. Figure 10A is a Smith chart showing the loci of impedances in the antenna device 20 and the antenna device 40. In Figure 10A, a solid line 901 represents a locus of impedance in the antenna device 20, and a dotted line 902 represents a locus of impedance in the antenna device 40. Figure 10B is a VSWR characteristic diagram in the antenna device 20 and the antenna device 40. In Figure 10B, an axis of ordinates represents VSWR, and an axis of abscissas represents a frequency [MHz], a solid line 911 represents a VSWR characteristic in the antenna device 20, and an alternate long and short dash line 912 represents a VSWR characteristic in the antenna device 40 in the second embodiment.

As shown in Figure 10A, the impedance of the antenna device 20 is capacitive in the DTTB band, and the locus 901 is in a lower half region of the Smith chart. The impedance of the antenna device 40 is also capacitive in the DTTB band, and the locus 902 is in the lower half region of the Smith chart. However, in the antenna device 40, a chip capacitor is used as the reactance adjustment device 16, whereby the locus 902 of the impedance of the antenna device 40 is in a position closer to a horizontal axis than the locus 901 of the impedance of the antenna device 20, and matching is achieved more than in the case with only the additional device 15.

Further, as shown by the solid line 911 in Figure 10B, VSWR in the DTTB band of the antenna device 20 increases with the frequency, and a minimum value thereof is 2.7, and a maximum value is 4.3. On the other hand, as shown in the alternate long and short dash line 912 in Figure 10B, VSWR of the antenna device 40 increases with the frequency, but a minimum value of VSWR is 1.6 whereas a maximum value is 1.9, and VSWR of the antenna device 40 is more remarkably improved than the VSWR of the antenna device 20.

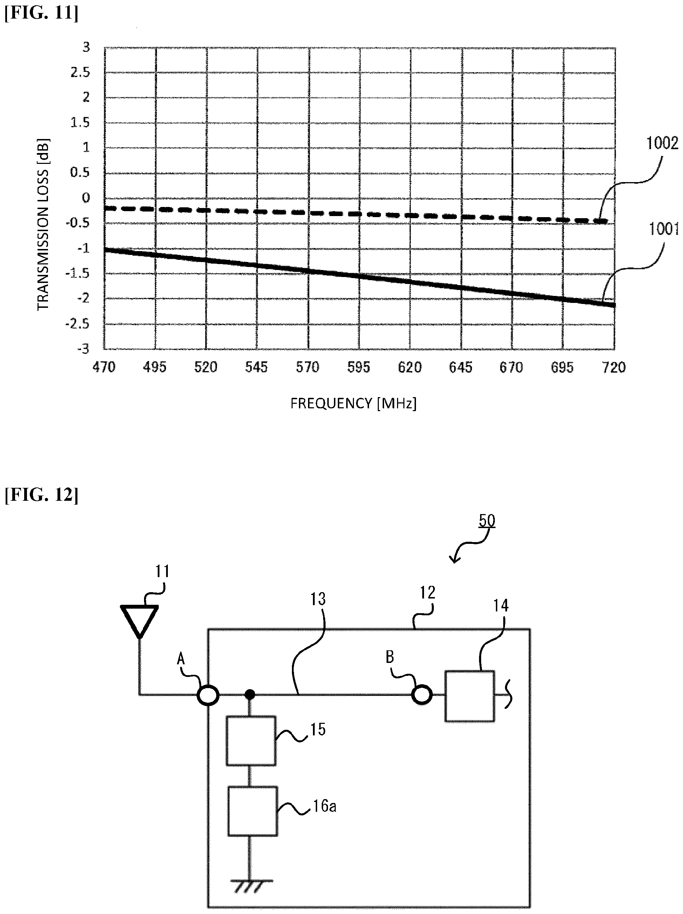

A similar tendency is also seen concerning the transmission loss characteristics. That is to say, Figure 11 is a graph showing transmission loss characteristics in the antenna device 20 and the antenna device 40. In this graph, a transmission loss in the antenna device 10 is set as 0 dB. In the drawing, a solid line 1001 represents a transmission loss (dB) of the antenna device 20, and a dotted line 1002 represents a transmission loss (dB) of the antenna device 40. The transmission loss in the antenna device 20 is -1 dB to -2.1 dB in the DTTB band, whereas the transmission loss in the antenna device 40 is -0.2 dB to -0.4 dB that is remarkably smaller than the antenna device 20 in the DTTB band. Accordingly, in the antenna device 40, the transmission loss is more reduced than in the antenna device 20.

### [Third Embodiment]

A third embodiment of the present disclosure will be described. Figure 12 is a schematic diagram showing a configuration example of an antenna device 50 according to the third embodiment. In the antenna device 50, a reactance adjustment device 16a formed of an inductive reactance element is mounted, instead of the reactance adjustment device 16 formed of a capacitive reactance element shown in Figure 9.

As the inductive reactance element, a chip inductor in which inductance reaches approximately 47 nH in a center frequency in the DTTB band is used in the present example. However, another inductive reactance element that has similar inductance in the DTTB band or a conductor pattern described later may be used.

In the third embodiment, a value of series impedance of the reactance adjustment device 16a is also set equal to or more than a value of series impedance of an additional device 15. When series impedance of the reactance adjustment device 16a in a frequency of 595 MHz, for example, is calculated from the expression of the series impedance described above, the series impedance of the reactance adjustment device 16a is +j175.4 Ω, which is higher than the series impedance 38.3 Ω of the aforementioned additional device 15.

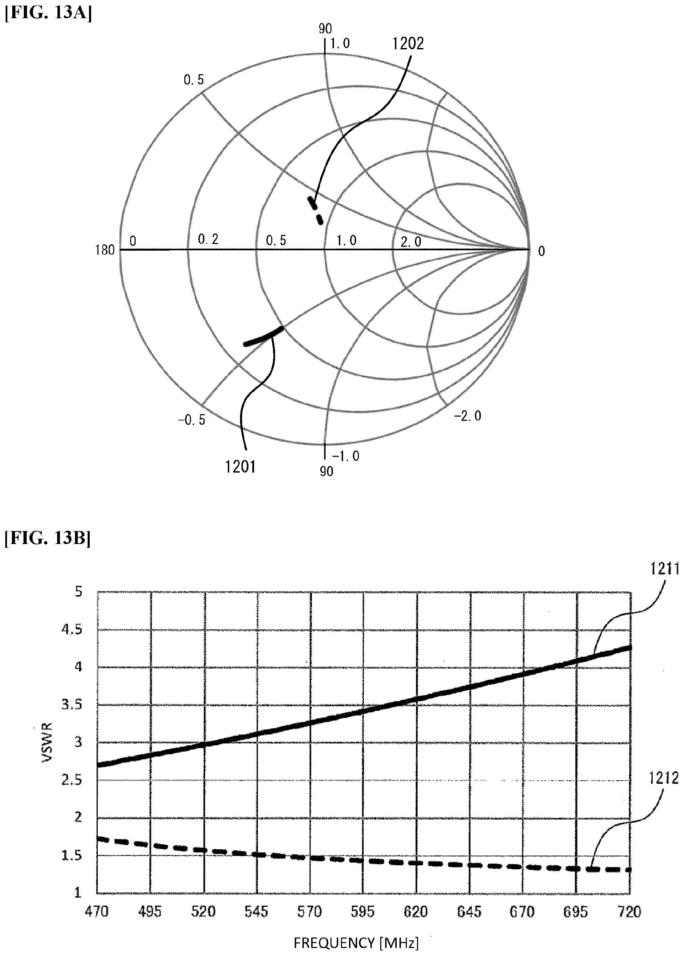

Next, an antenna characteristic of the antenna device 50 according to the third embodiment will be described. Figure 13A is a Smith chart showing frequency characteristics in the antenna device 20 and the antenna device 50. In the drawing, a solid line 1201 represents a locus of the impedance in the antenna device 20, and a dotted line 1202 represents a locus of impedance in the antenna device 50. Figure 13B is a VSWR characteristic diagram in the antenna device 20 and the antenna device 50 of the third embodiment. In this diagram, an axis of ordinates represents VSWR, an axis of abscissas represents a frequency (MHz), a solid line 1211 represents a VSWR characteristic in the antenna device 20, and a dotted line 1212 represents a VSWR characteristic in the antenna device 50 of the third embodiment.

As shown in Figure 13A, the impedance of the antenna device 20 is capacitive in the DTTB band, and the locus 1201 thereof is in a lower half region of the Smith chart. On the other hand, the impedance of the antenna device 50 is inductive in the DTTB band, the locus 1202 thereof is in an upper half region of the Smith chart, and is closer to a horizontal axis than the locus of the impedance in the antenna device 20.

Further, as shown in Figure 13B, VSWR in the antenna device 20 and the antenna device 50 increases with frequency, a minimum value thereof is 2.7 and a maximum value is 4.3, whereas VSWR in the antenna device 50 decreases with frequency, a maximum value thereof is 1.7, and a minimum value is 1.0.

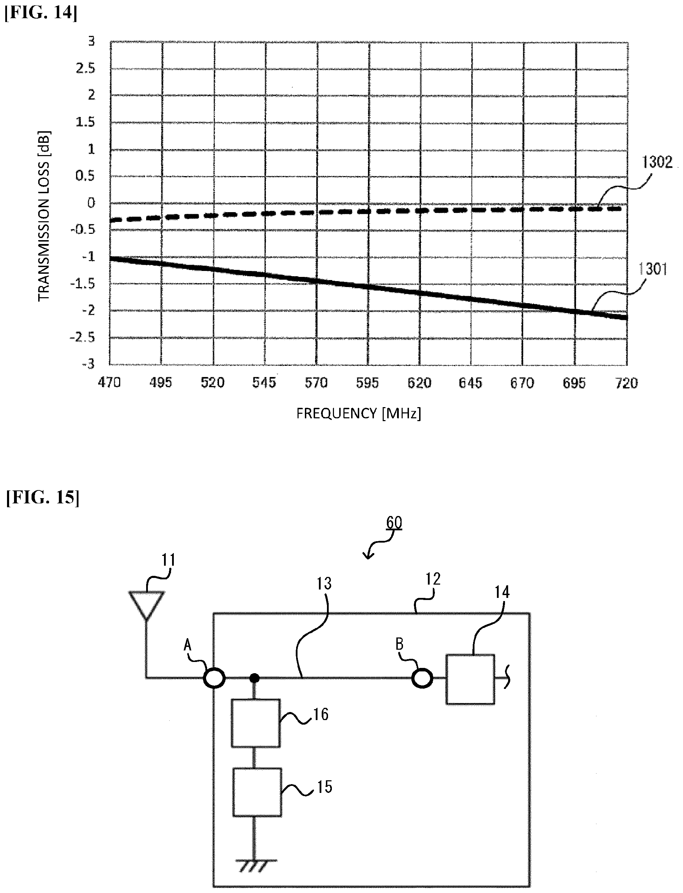

Figure 14 is a graph showing transmission loss characteristics in the antenna device 20 and the antenna device 50. In this graph, the transmission loss in the antenna device 10 is set as 0 dB. In the drawing, a solid line 1301 represents a transmission loss of the antenna device 20. In the antenna device 20, the transmission loss is larger than -1 dB, the transmission loss increases as the frequency becomes higher, and a maximum transmission loss is -2.1 dB. A dotted line 1302 represents a transmission loss of the antenna device 50. The transmission loss in the antenna device 50 is -0.3 dB to -0.1 dB in the DTTB band, and the transmission loss is reduced.

In the antenna device 40 of the second embodiment, one end of the additional device 15 is connected to the line 13 connecting the board input part A and the electronic component, the other end is connected to one end of the reactance adjustment device 16, and the other end of the reactance adjustment device 16 is connected to the ground. Similarly, also in the antenna device 50 of the third embodiment, one end of the additional device 15 is connected to the line 13 connecting the board input part A and the electronic circuit 14, the other end is connected to one end of the reactance adjustment device 16a, and the other end of the reactance adjustment device 16a is connected to a ground part. However, it is possible to obtain similar effects even if the additional device 15 and the reactance adjustment device 16 (or the reactance adjustment device 16a) are arranged by changing the order of these devices.

### [Fourth Embodiment]

A fourth embodiment of the present disclosure will be described. Figure 15 is a schematic diagram showing a configuration example of an antenna device 60 according to the fourth embodiment. The antenna device 60 differs from the embodiments described so far in that one end of a reactance adjustment device 16 is connected to a line 13 connecting a board input part A and an electronic circuit 14, the other end is connected to one end of an additional device 15, and the other end of the additional device 15 is connected to a ground part.

In other words, the additional device 15 and the reactance adjustment device 16 are arranged by changing positions of the additional device 15 and the reactance adjustment device 16. The reactance adjustment device 16 is a chip capacitor of a capacity of 5 pF similarly to the antenna device 40. In the antenna device 60, the reactance adjustment device 16 may also be a capacitor, an inductor, or what is formed by arranging a capacitor and an inductor in parallel.

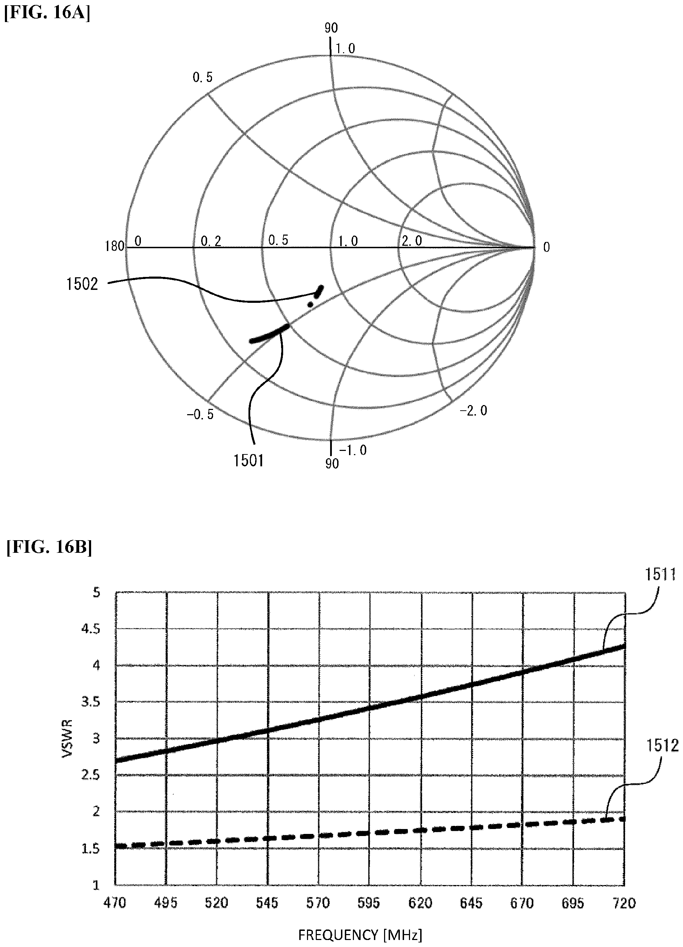

Figure 16A is a Smith chart showing the loci of impedance in the antenna device 20 and the antenna device 60. In the drawing, a solid line 1501 represents a locus of impedance in the antenna device 20, and an alternate long and short dash line 1502 represents a locus of impedance in the antenna device 60. Figure 16B is a VSWR characteristic diagram in the antenna device 20 and the antenna device 60. In the drawing, an axis of ordinates represents VSWR, an axis of abscissas represents a frequency [MHz], a solid line 1511 represents a VSWR characteristic in the antenna device 20, and an alternate long and short dash line 1512 represents a VSWR characteristic in the antenna device 60.

As shown in Figure 16A, the impedance of the antenna device 20 is capacitive in the DTTB band, and the locus is in a lower half region of the Smith chart as shown by the solid line 1501. The antenna device 60 is similar to the antenna device 20 in that the impedance of the antenna device 60 is also capacitive in the DTTB band, and the locus is in the lower half region of the Smith chart as shown by the alternate long and short dash line 1502. However, by connecting the reactance adjustment device 16 to the line 13, and connecting the reactance adjustment device 16 to the additional device 15 in series, the locus 1502 of the impedance in the antenna device 60 is in a position closer to a horizontal axis than that of the antenna device 20.

Further, as shown by the solid line 1511 in Figure 16B, VSWR in the antenna device 20 increases with frequency, and a minimum value thereof is 2.7, whereas a maximum value is 4.3. On the other hand, as shown by the solid line 1512 in Figure 16B, VSWR in the antenna device 60 increases with frequency, but VSWR and fluctuation thereof are smaller than those in the antenna device 20, and a minimum value is 1.6, whereas a maximum value is 1.9.

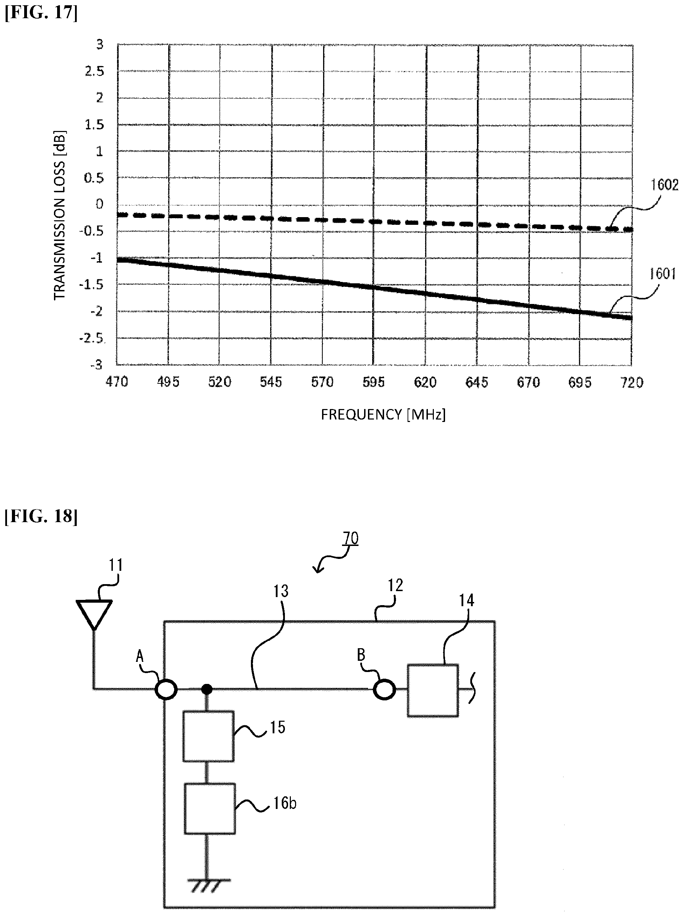

Figure 17 is a graph showing transmission loss characteristics in the antenna device 20 and the antenna device 60 of the fourth embodiment. In this graph, the transmission loss in the antenna device 10 is set at 0 dB. In the drawing, a solid line 1601 represents a transmission loss characteristic of the antenna device 20, and a dotted line 1602 represents a transmission loss characteristic of the antenna device 60. The transmission loss in the DTTB band of the antenna device 20 is -1 to -2.1 dB, and the transmission loss in the DTTB band of the antenna device 60 is -0.2 to -0.4 dB. In this way, it is found that in the antenna device 60, transmission loss of power is more reduced than in the antenna device 20. Further, the transmission loss characteristic 1602 in Figure 17 and the transmission loss characteristic 1002 in Figure 11 are substantially the same. From this, it is found that equivalent transmission loss characteristics are obtained in the antenna device 60 and the antenna device 40.

### [Fifth Embodiment]

A fifth embodiment of the present disclosure will be described. In the explanation so far, the reactance adjustment devices 16 and 16a are explained as using capacitance components and inductance components by the chip elements and the conductor patterns. In the fifth embodiment, an example of a case of using a diode or other semiconductor devices as a reactance adjustment device 16b will be described.

Figure 18 is a schematic diagram showing a configuration example of an antenna device 70 of the fifth embodiment. The reactance adjustment device 16b uses a semiconductor element. As illustrated, in the antenna device 70, the additional device 15 and the reactance adjustment device 16b are connected in series. By this configuration, it is also possible to provide a function of reduction in transmission loss by the reactance adjustment device 16b while making use of the elimination function of electrical stress by the additional device 15.

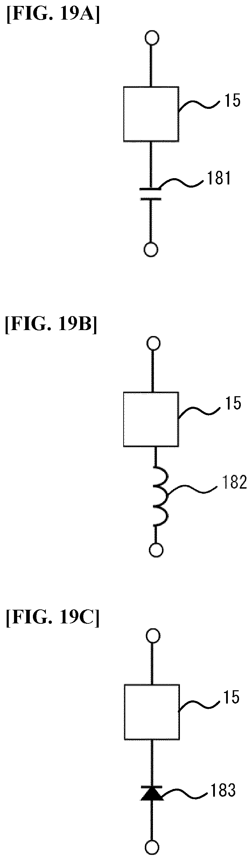

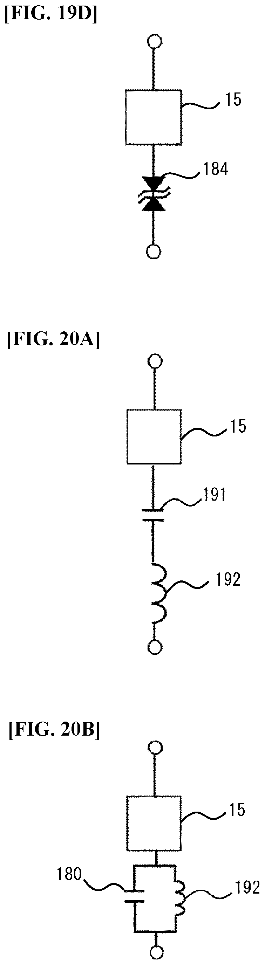

Alternative configuration examples of the reactance adjustment device 16b are shown in Figure 19A to Figure 19D. Figure 19A is a configuration in which a capacitor 181 as the reactance adjustment device 16b is connected in series to the additional device 15. Figure 19B is a configuration in which an inductor 182 as the reactance adjustment device 16b is connected in series to the additional device 15. Figure 19C is a configuration in which a diode 183 as the reactance adjustment device 16b is connected in series to the additional device 15. Figure 19D is a configuration in which a TVS diode 184 as the reactance adjustment device 16b is connected in series to the additional device 15.

Further, even if a filter configuration that passes only the DTTB band, or a band-rejection filter configuration that inhibits passage of external noise frequencies, a high frequency component of static electricity or the like is used as another mode of the reactance adjustment device 16b, it is also possible to similarly suppress a transmission loss in the DTTB band. The filter may be formed of an electronic component, or a wiring pattern.

Figure 20A and Figure 20B are illustration diagrams of connection aspects of the reactance adjustment device 16. Figure 20A is a configuration in which an additional device 15, a capacitor 191, and an inductor 192 are connected in series in this order. Figure 20B is a configuration in which a parallel circuit of a capacitor 180 and the inductor 192 is connected in series to the additional device 15. By these configurations, it is possible to suppress a transmission loss in the DTTB band.

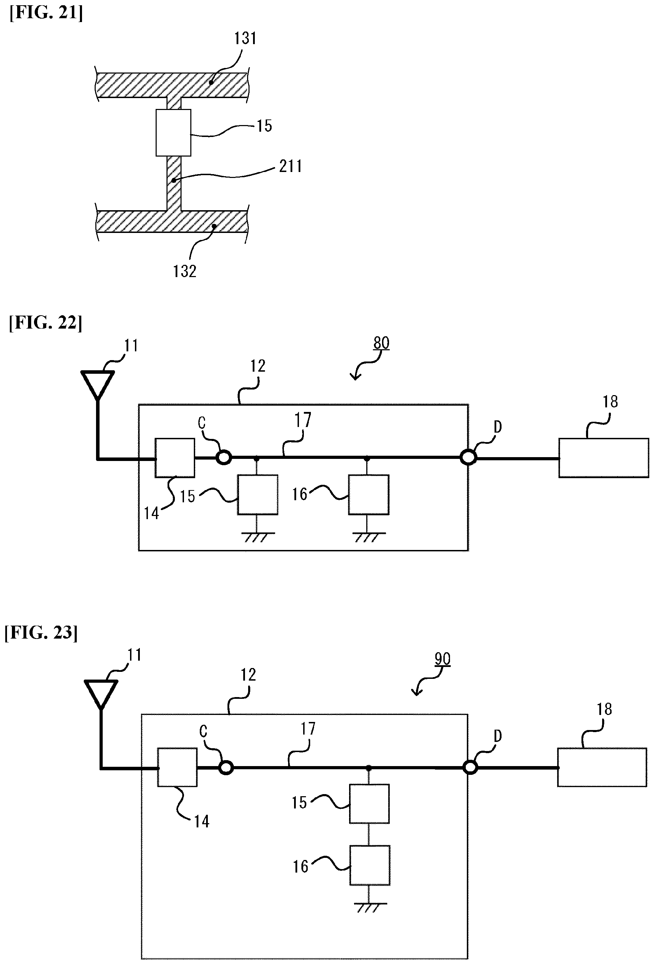

It is also possible to configure the reactance adjustment devices 16, 16a and 16b by a conductor pattern with a line similar to the first embodiment. For example, as shown in Figure 21, it is possible to adopt a configuration in which a reactance pattern 211 connects the other end of an additional device 15 having one end connected to a line 131 formed of a conductor pattern, and a ground part 132. A width, a thickness, and a length (distance between the other end of the additional device 15 and the ground part 132) of the reactance pattern 211 are set at such values that impedance becomes equivalent to or larger than an inter-terminal capacitance of the additional device 15. A polarity of the reactance pattern 211 to the additional device 15 is not particularly limited. A shape of the reactance pattern 211 is not limited to a linear shape as illustrated, but may be in a non-linear shape, or a combination of a pattern in a linear shape and a pattern in a non-linear shape.

### [Sixth Embodiment]

In each of the first to the fifth embodiments, the example in which the additional device 15 and the reactance adjustment device 16 are arranged on the input side of the circuit board 12, that is, between the board input part A and the circuit input part B is described. This is because the additional device 15 needs to protect the electronic components of the electronic circuit 14 from the electrical stress caused by electric power that is mainly inputted through the antenna part 11.

However, the electrical stress may also occur on an output side of the electronic circuit 14. In other words, in an antenna device for a vehicle, external electronic equipment, for example, a system unit may be connected to the output side of the electronic circuit 14.

The system unit supplies a DC voltage for antenna drive to an antenna part 11 via a circuit board 12, and receives a signal (RF signal) in the DTTB band from the circuit board 12. Since in the antenna device for a vehicle, the DC voltage for antenna drive is supplied from a vehicle battery, the DC voltage may fluctuate according to engine ON/OFF and a vehicle driving condition. The fluctuation in the DC voltage becomes electrical stress to the circuit board 12, in particular, the electronic circuit 14. In the sixth embodiment, an example of a case where an additional device 15 for eliminating such electrical stress, and a reactance adjustment device 16 that is paired with the additional device 15 are arranged is described.

Figure 22 is a schematic diagram showing a configuration example of an antenna device 80 according to the sixth embodiment. In this antenna device 80, the additional device 15 and the reactance adjustment device 16 are arranged in parallel between an output side of the circuit board 12, that is, a circuit output part C and a board output part D. Since the board output part D is a part to be connected to the external electronic equipment such as a system unit, the board output part D can also be said as the external connection part D to be an interface with external electronic equipment. The additional device 15 and the reactance adjustment device 16 are connected in parallel. In other words, one end of the additional device 15 is connected to a line 17 connecting the circuit output part C and the board output part D, and the other end of the additional device 15 is grounded. One end of the reactance adjustment device 16 is also connected to the line 17, and the other end of the reactance adjustment device 16 is grounded. The system unit 18 described above is connected to the board output part D.

Figure 23 is a schematic diagram showing a configuration example of an antenna device 90 that is a modification example of the sixth embodiment. In the antenna device 90, an additional device 15 and a reactance adjustment device 16 are connected in series in this order, and the other end of the reactance adjustment device 16 is grounded. The other configuration is the same as in Figure 22.

In the configurations of the antenna devices 80 and 90, it is possible to exhibit similar effects to the effects of the antenna devices 30 and 40. In other words, the antenna devices 80 and 90 can suppress an increase in transmission loss while maintaining an elimination operation of the electrical stress by the additional device 15.

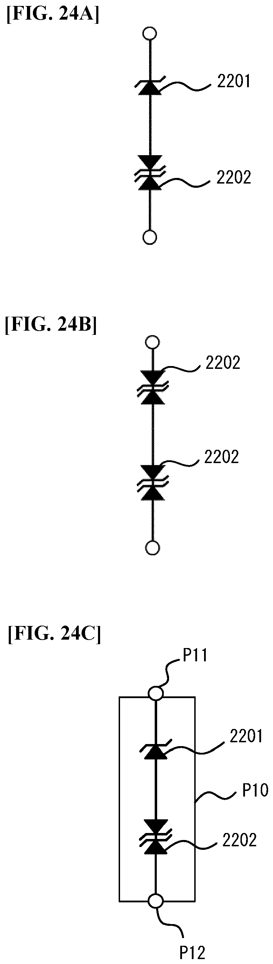

Specific configuration examples of the additional device 15 and the reactance adjustment device 16 in the antenna device 90 will be described with reference to Figure 24A to Figure 24C. Figure 24A is an example in which a Zener diode 2201 as the additional device 15, and a TVS (transient voltage suppression) diode 2202 as the reactance adjustment device 16 are connected in series.

The Zener diode 2201 operates when a voltage exceeding a maximum rated voltage of the electronic components of the circuit board 12 is applied as the DC voltage from the system unit 18. However, the Zener diode 2201 generally has inter-terminal capacitance of about several tens pF to several hundreds pF. Therefore, by only using the Zener diode 2201 as the additional device 15 in the DTTB band, a level of a signal (RF signal) outputted from the circuit board 12 to the system unit 18 is significantly attenuated. Therefore, in the configuration example shown in Figure 24A, the TVS diode 2202 is connected in series to the Zener diode 2201, as the reactance adjustment device 16.

At a certain frequency in the DTTB band, the inter-terminal capacitance of the Zener diode 2201 is 275 pF, and an inter-terminal capacitance of the TVS diode 2202 is 0.35 pF. At this time, an inter-terminal capacitance at a time of the Zener diode 2201 and the TVS diode 2202 being connected in series is 0.35 pF, which is very small, and it is possible to suppress attenuation of the RF signal.

Further, the TVS diode 2202 has a function as an overvoltage protection component, and therefore has the advantage of being capable of protecting electronic components by itself in a case where electrical stress of static electricity or the like occurs during handling in a manufacturing line of the antenna device 90 or the circuit board 12, in addition to the operational effects as the reactance adjustment device 16. In Figure 24A, a mode in which the Zener diode 2201 and the TVS diode 2202 are connected in series is shown. In this example, an operation voltage of the protection element rises by the Zener diode and the TVS diode being connected in series. In Figure 24B, an example in which the operation voltage of the protection element is raised by arranging two TVS diodes in series is shown as another mode. In the examples in Figure 24A and Figure 24B, an advantage of being able to prevent an erroneous operation due to the DC voltage to be supplied, a ripple or the like is obtained since the operation voltages of the protection elements rise.

Figure 24C is an example in which the Zener diode 2201 and the TVS diode 2202 in the example of Figure 24A are packaged in one container P10. In the container P10, an input terminal P11 and an output terminal P12 are mounted, one end of the Zener diode 2201 is connected to the input terminal P11, and the other end is connected to one end of the TVS diode 2202. The other end of the TVS diode 2202 is connected to the output terminal P12.

Since the Zener diode 2201 and the TVS diode 2202 are packaged in the one container P10 like this, it is possible to simplify a manufacturing process as compared with a case of separately incorporating these diodes in the antenna device 90. Further, exchange is also facilitated. Furthermore, it is possible to manufacture the packaged product as an independent protection device. In this case, the usage becomes possible in not only the antenna device 90 but also other electronic devices, and it is possible to increase an application scene of the present disclosure.

The configuration of packaging in the one container P10 is not limited to the example in Figure 24A and can be similarly adopted for the example in Figure 24B and the additional device 15 and the reactance adjustment device 16 that are described so far.

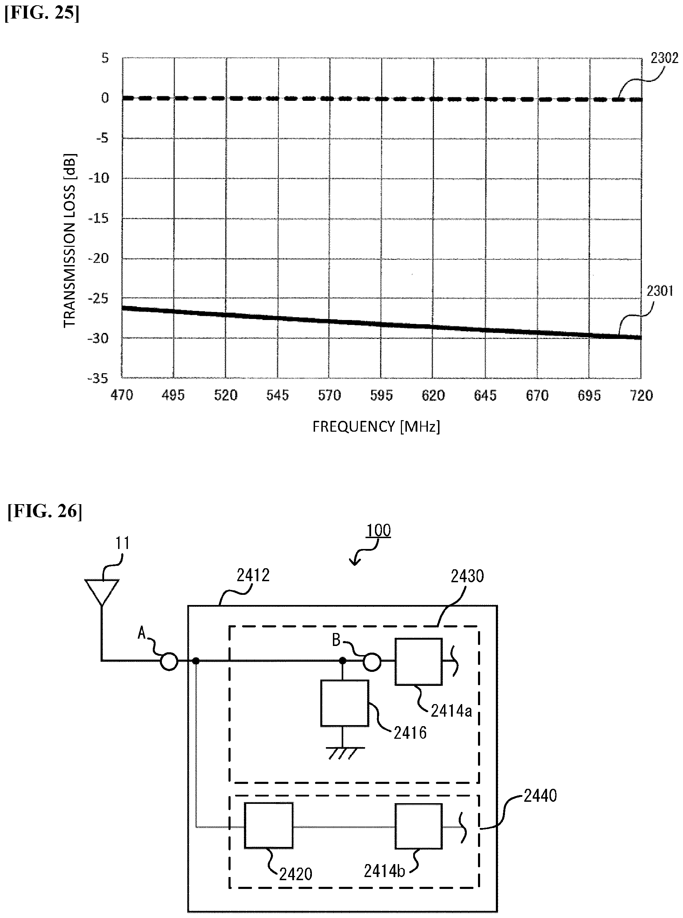

An antenna characteristic of the antenna device 90 will be described. Figure 25 is a graph showing a transmission loss characteristic in the antenna device 90. The transmission loss is a transmission loss from the board output part D to the circuit output part C on the circuit board 12 in the DTTB band. In this graph, the transmission loss in the antenna device 10 is set as 0 dB. In the drawing, a solid line 2301 represents a transmission loss in a configuration example in which only the Zener diode 2201 is inserted as the additional device 15 in the antenna device 90, and a maximum loss thereof is -29.9 dB.

On the other hand, in the drawing, a dotted line 2302 represents a transmission loss in a configuration example in which the Zener diode 2201 and the TVS diode 2202 are connected in series in the antenna device 90, and a maximum transmission loss thereof is 0 dB. From the result, it is found that the transmission loss is significantly suppressed by connecting the Zener diode 2201 and the TVS diode 2202 in series.

It is possible to apply the arrangement structure example of the respective components shown in Figure 8 similarly to the second to the sixth embodiments. Further, in the explanation of the first to the sixth embodiments, the frequency band in use is the DTTB band, but the present disclosure can also be applied not only in the DTTB band but also in other high frequency bands, for example, a microwave band, or a high frequency band higher than the microwave band, as long as it is a frequency band in which the reactance component of the additional device 15 becomes so large that it cannot be ignored, that is, the frequency band in which the reactance component of the additional device 15 influences the operation of the electronic circuit 14. Alternatively, the present disclosure can also be applied in an FM wave band below the microwave band. Hereinafter, an embodiment example in a case of being applied to an FM wave band will be described.

### [Seventh Embodiment]

A seventh embodiment of the present disclosure will be described. Here, an example of a case in which an electronic circuit for an FM wave band is added to an antenna device, in addition to an electronic circuit for a DTTB band will be described. Figure 26 is a schematic diagram showing a configuration example of an antenna device 100 of the seventh embodiment. In the antenna device 100, an FM circuit 2430 and a DTTB circuit 2440 are mounted to one circuit board 2412. In the drawing, an antenna part 11 is connected to the circuit board 2412 through a board input part A, and input is divided into the FM circuit 2430 and the DTTB circuit 2440.

In the FM circuit 2430, a line is further branched, and one of the branched lines is connected to a circuit input part B on an input side of an electronic circuit 2414a, and the other one is connected to a reactance adjustment device 2416. In the DTTB circuit 2440, the line is connected to an electronic component 2414b via a filter 2420. In this case, from the FM circuit 2430, it looks like the filter of the DTTB circuit 2440 is added in parallel. Therefore, impedance on a DTTB circuit 2440 side (DTTB circuit impedance) gives electrical stress to the FM circuit 2430. In other words, the DTTB circuit impedance is a fluctuation element of impedance on an input side of the FM circuit 2430.

Thus, in the seventh embodiment, one end of the reactance adjustment device 2416 that is in a complex conjugate relationship with the DTTB circuit impedance added in parallel is connected to an input side of the electronic circuit 2414a of the FM circuit 2430, and the other end is connected to a ground part.

By configuring in this way, the reactance adjustment device 2416 cancels electrical stress to be applied to the electronic circuit 2414a of the FM circuit 2430 by itself, and operates to suppress an influence of an impedance fluctuation on an input side of the FM circuit 2430 due to the DTTB circuit impedance. Therefore, it is possible to exhibit similar effects as the effects of the first to the sixth embodiments.

### [Eighth Embodiment]

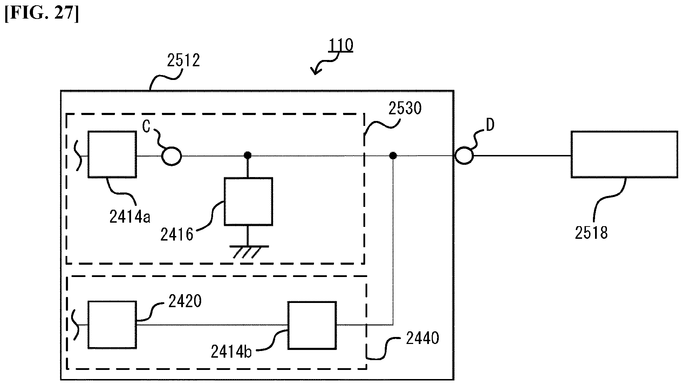

An eighth embodiment of the present disclosure will be described. Here, an example in which the reactance adjustment device 2416 described in the seventh embodiment is arranged on an output side of the FM circuit 2430 is described. Figure 27 is a schematic diagram showing a configuration example of an antenna device 110 according to the eighth embodiment, and the same elements as the elements in Figure 26 are assigned with the same reference signs.

In the antenna device 110, a system unit 2518 (the same unit as the aforementioned system unit 18) is connected to a board output part D. The system unit 2518 supplies a DC voltage for antenna drive to an antenna part 11 (not illustrated) via a circuit board 2512 and receives a signal in the DTTB band (RF signal) and a signal in an FM wave band (FM signal) from the circuit board 2512. Since the DC voltage for antenna drive of the antenna device 110 is supplied from a vehicle battery, the DC voltage may fluctuate depending on engine ON/OFF, and a vehicle driving condition. The fluctuation of the DC voltage becomes electrical stress to respective components of the DTTB circuit 2440 and the FM circuit 2530 of the circuit board 2512.

Thus, in the eighth embodiment, one end of a reactance adjustment device 2416 is connected to a line between a circuit output part C on an output side of an electronic circuit 2414a of the FM circuit 2530 and a board output part D, and the other end of the reactance adjustment device 2416 is connected to a ground part.

In the antenna device 110 with the configuration like this, the reactance adjustment device 2416 itself eliminates electrical stress to be applied to the electronic circuit 2414a of the FM circuit 2530, and operates to suppress an influence of an impedance fluctuation in an output side of the FM circuit 2530 caused by the DTTB circuit 2440 (DTTB circuit impedance). Therefore, it is possible to exhibit similar effects to the effects of the seventh embodiment.

### [Other Embodiments]

It is also possible to carry out the present disclosure as an electronic circuit protection device including an electronic circuit, an additional device connected between an input side or an output side of the electronic circuit and a ground part, and adding electrical stress to a component of the electronic circuit, and a reactance adjustment device that cancels reactance of the additional device in a frequency band in use, besides the embodiments as the antenna device 30 and the like.

Alternatively, it is also possible to carry out what is made by packaging the additional device and the reactance adjustment device as the electronic circuit protection device, as shown in Figure 22B.

### <Main Points of Respective Embodiments>

From the explanation of the respective embodiments above, configurations described below and operational effects by the configurations, for example, are derived.
(1) An antenna device including an antenna part, a board to which the antenna part is connected, an electronic circuit mounted to the board, and a reactance adjustment device that cancels reactance in a frequency band in use, the reactance causing electrical stress to be applied to a component of the electronic circuit, wherein the board includes a board input part serving as an input interface with the antenna part, and the reactance adjustment device is mounted between the board input part and the electronic circuit, and is connected to a ground part.

The reactance causing the electrical stress is, for example, reactance of an additional device that is connected between the board input part and the ground part, and that eliminates electrical stress to be applied to the component of the electronic circuit.

According to the configuration, the reactance adjustment device cancels the reactance causing the electrical stress, and therefore, an increase in a transmission loss of a signal (power) from the antenna part to the electronic circuit can be suppressed while eliminating the electrical stress.

Further, it is also possible to adopt a configuration in which the board includes the board input part serving as the input interface with the antenna part and a circuit input part serving as an input interface of the electronic circuit, and the reactance adjustment device is mounted between the board input part and the electronic circuit. According to the configuration, an increase in transmission loss of a signal (power) from the antenna part to the electronic circuit can be suppressed.

(2) An antenna device including an antenna part, a board to which the antenna part is connected, an electronic circuit mounted to the board, and a reactance adjustment device that cancels reactance in a frequency band in use, the reactance causing electrical stress to be applied to a component of the electronic circuit, wherein the board includes an external connection part to be connected to external electronic equipment, and the reactance adjustment device is mounted between the electronic circuit and the external connection part, and is connected to a ground part.

The reactance causing the electrical stress is, for example, reactance of an additional device that is connected between the circuit output part and the ground part, and that eliminates electrical stress to be applied to the component of the electronic circuit.

According to the configuration, the reactance adjustment device cancels the reactance causing the electrical stress, and therefore, an increase in transmission loss of a signal (power) from the external electronic equipment to the electronic circuit can be suppressed while eliminating the electrical stress.

Further, it is also possible to adopt a configuration in which the board includes a circuit output part to be an output side of the electronic circuit and the external connection part to be connected to the external electronic equipment, and the reactance adjustment device is mounted between the circuit output part and the external connection part and is connected to the ground part. According to the configuration, an increase in transmission loss of a signal (power) from the external electronic equipment to the circuit output part of the electronic circuit can be suppressed.
(3) An antenna device, wherein impedance of the reactance adjustment device is in a complex conjugate relationship with impedance of the additional device in the frequency band in use. According to the configuration, the reactance of the additional device is cancelled to a zero value by the reactance adjustment device, and impedance of the antenna part and impedance of the electronic circuit are matched.
(4) An antenna device, wherein the additional device and the reactance adjustment device are connected in parallel. In particular, (5) an antenna device, wherein the additional device and the reactance adjustment device are arranged at an interval within 1/10 of a wavelength of a frequency in use. According to the configuration, an increase in inductance and capacitance of a line by mounting the reactance adjustment device is suppressed.
(6) An antenna device, wherein the reactance adjustment device is connected in series to the additional device. In particular, (7) an antenna device wherein the additional device is a Zener diode, and the reactance adjustment device is a TVS diode. According to the configuration, not only the transmission loss from the antenna part to the circuit output part of the electronic circuit is significantly suppressed, but also protection of the electronic component by the TVS diode also having a function as an overvoltage protection component becomes stronger.
(8) An antenna device, wherein the additional device and the reactance adjustment device are packaged in one container. According to the configuration, it is possible to simplify a manufacturing process as compared with the case in which the respective devices are separately incorporated into the antenna device. Further, it also facilitates replacement.
(9) An antenna device, wherein the frequency band in use is a high frequency band in which a reactance component of the additional device influences an operation of the electronic circuit, for example, a frequency band of a microwave band or a higher. According to the configuration, it is possible to eliminate an influence (increase) of the reactance of the additional device more remarkably.
(10) A electronic circuit protection device including an electronic circuit, an additional device that is connected between an input side or an output side of the electronic circuit, and a ground part, and is added to protect a component of the electronic circuit from electrical stress, and a reactance adjustment device that cancels reactance of the additional device in a frequency band in use. According to the configuration, it is possible to enlarge an application scene of the preset disclosure.

## Claims

1. An antenna device, comprising:
an antenna part;
a board to which the antenna part is connected;
an electronic circuit mounted to the board; and
a reactance adjustment device that cancels reactance in a frequency band in use, the reactance causing electrical stress to be applied to a component of the electronic circuit,
wherein the board includes a board input part serving as an input interface with the antenna part, and
the reactance adjustment device is mounted between the board input part and the electronic circuit, and is connected to a ground part.

2. An antenna device, comprising:
an antenna part;
a board to which the antenna part is connected;
an electronic circuit mounted to the board; and
a reactance adjustment device that cancels reactance in a frequency band in use, the reactance causing electrical stress to be applied to a component of the electronic circuit,
wherein the board includes an external connection part to be connected to external electronic equipment, and
the reactance adjustment device is mounted between the electronic circuit and the external connection part, and is connected to a ground part.

3. The antenna device according to claim 1,
wherein the reactance causing the electrical stress is reactance of an additional device that is connected between the board input part and the ground part, and that eliminates electrical stress to be applied to the component of the electronic circuit.

4. The antenna device according to claim 2,
wherein the reactance causing the electrical stress is reactance of an additional device that is connected to between the electronic circuit and the ground part, and that eliminates electrical stress to be applied to the component of the electronic circuit.

5. The antenna device according to claim 3 or 4,
wherein impedance of the reactance adjustment device is in a complex conjugate relationship with impedance of the additional device in the frequency band in use.

6. The antenna device according to any one of claims 3 to 5,
wherein the additional device and the reactance adjustment device are connected in parallel.

7. The antenna device according to claim 6,
wherein the additional device and the reactance adjustment device are arranged at an interval within 1/10 of a wavelength of a frequency in use.

8. The antenna device according to any one of claims 3 to 5,
wherein the reactance adjustment device is connected in series to the additional device.

9. The antenna device according to claim 8,
wherein the additional device is a Zener diode, and the reactance adjustment device is a TVS diode.

10. The antenna device according to any one of claims 3 to 9,
wherein the additional device and the reactance adjustment device are packaged in one container.

11. The antenna device according to any one of claims 1 to 10,
wherein the frequency band in use is a high frequency band in which the reactance causing the electrical stress influences an operation of the electronic circuit.

12. The antenna device according to claim 11,
wherein the high frequency band is a frequency band of a microwave band or higher.

13. The antenna device according to any one of claims 1 to 12,
wherein the electronic circuit contains an active element.

14. An electronic circuit protection device, comprising:
an electronic circuit;
an additional device that is connected between an input side or an output side of the electronic circuit and a ground part, and is added to protect a component of the electronic circuit from electrical stress; and
a reactance adjustment device that cancels reactance of the additional device in a frequency band in use.
